# EUROPÄISCHE PATENTANMELDUNG

(11) **EP 1 898 065 A1**
(43) Veröffentlichungstag der Anmeldung: **12.03.2008**
(21) Anmeldenummer: 06119197.9
(22) Anmeldetag: 18.08.2006
(51) Int. Cl.: F02B 77/02, F02F 3/10, F16J 9/26, F16J 1/02, F02B 75/02

(54) **Kolben für einen Zweitakt-Grossdieselmotor, sowie Zweitakt-Grossdieselmotor**

(71) Anmelder: Wärtsilä Schweiz AG, 8401 Winterthur (CH)
(72) Erfinder: Amoser, Dr., Matthias, 8492, Wila (CH)
(74) Vertreter: Sulzer Management AG

(57) **Zusammenfassung**

Die Erfindung betrifft einen Kolben (1) für einen Zweitakt-Grossdieselmotor, wobei der Zweitakt-Grossdieselmotor mindestens einen Zylinder (2) umfasst, in welchem der Kolben (1) zwischen einem oberen Totpunkt (OT) und einem unteren Totpunkt (UT) hin- und herbewegbar angeordnet ist, wobei im Zylinder (2) durch einen Zylinderdeckel (3), eine Zylinderwand (4) des Zylinders (2), und eine Kolbenoberfläche (5) des Kolbens ein Brennraum (6) begrenzt ist. Der Kolben (1) umfasst eine mindestens einen Kolbenring (71) umfassende Kolbenringpackung (7), die zwischen einer Kolbenkrone (101) mit einem Feuersteg (102), der sich in einer dem Zylinderdeckel (3) abgewandten Richtung an die Kolbenoberfläche (5) anschliesst, und einem Kolbenhemd (103), welches einen unteren, vom Zylinderdeckel (3) abgewandten Abschnitt des Kolben bildet, angeordnet ist. Erfindungsgemäss ist in einem vorgebbaren Bereich einer Oberfläche (8) des Kolbens (1) und / oder des Kolbenrings ein Ablagerungen abweisendes Antihaftmittel (9) vorgesehen. Des weiteren betrifft die Erfindung einen Zweittakt-Grossdieselmotor mit einem Kolben (1) gemäss der vorliegenden Erfindung.

## Beschreibung

Die Erfindung betrifft einen Kolben für einen Zweitakt-Grossdieselmotor, sowie einen Zweitakt-Grossdieselmotor mit einem erfindungsgemässen Kolben gemäss dem Oberbegriff der unabhängigen Ansprüche 1 und 10.

Die aus dem Stand der Technik bekannten Kolben für einen Grossdieselmotor sind in der Regel mit einer Packung aus mehreren, in jeweils einer Kolbenringnut übereinander angeordneten Kolbenringen ausgestattet. Typischerweise umfassen die bekannten Kolbenringpackungen mindestens zwei Kolbenringe, meist jedoch drei, vier oder sogar fünf Kolbenringe, je nach Grösse und / oder Leistung des Grossdieselmotors bzw. je nach Anforderungen bzw. den speziellen Betriebsbedingungen, unter denen die Maschine betrieben wird.

Die Kolbenringe, die verschiedene Funktionen erfüllen, wie zum Beispiel die Führung des Kolbens im Zylinder, die Verteilung und / oder Abstreifung eines Schmiermittels auf der Lauffläche des Zylinders, die Abdichtung des Brennraums gegen das Kurbelgehäuse usw., sind im Betriebszustand erheblichen Belastungen ausgesetzt. So stehen die Kolbenringe unmittelbar in reibendem Kontakt mit der Zylinderlauffläche, der Verbrennungsdruck muss von den Kolbenringen aufgenommen werden und die Kolbenringe sind nicht zuletzt erheblichen thermischen, mechanischen und chemischen Belastungen ausgesetzt.

Dabei ist der am stärksten beanspruchte Kolbenring, insbesondere was die Aufnahme des Verbrennungsdrucks angeht, der dem Verbrennungsraum des Zylinders am nächsten gelegene Kolbenring, der häufig auch als "Top-Ring" bezeichnet wird. Bei den aus dem Stand der Technik bekannten Kolbenringen ist dabei jeweils nur der Top-Ring mit einer Verschleissschutzbeschichtung, einer so genannten "Low-Wear-Beschichtung", an seiner Lauffläche versehen, die zum Beispiel aus einer geeigneten Chrom-Keramik bestehen kann. Die anderen Kolbenringe der Kolbenringpackung müssen dabei keine Verschleissschutzschicht haben, können aber ebenfalls mit einer solchen ausgestattet sein. Häufig ist an den Laufflächen der Kolbenringe anstatt der Verschleissschutzschichten eine abtragbare Einlaufschicht, eine sogenannte "Running-In-Schicht" vorgesehen, die sich in dem Fachmann wohlbekannter Art und Weise im Betriebszustand relativ schnell abschleift, so dass der entsprechende Kolbenring nach Abschluss einer Running-In-Phase, also nach Abschluss einer Einlaufphase, optimal im Zylinderliner entlang der Zylinderwand läuft.

Dabei sind Verschleissschutzschichten nicht nur unmittelbar an den Laufflächen der Kolbenringe vorgesehen, sondern z.B. auch in den Kolbenringnuten, in denen die Kolbenringe im Kolben geführt sind.

Dabei hat sich das Interesse bisher im wesentlichen auf den Verschleissschutz der Kolbenring und der Kolbenringnuten, sowie auf die Verbesserung der Einlaufeigenschaften der Kolbenringe beschränkt.

Wesentlich weniger Beachtung findet dabei die Kolbenoberfläche, vor allem die Bereiche in Umfangsrichtung, die, lediglich beabstandet durch die Kolbenringe, direkt der Zylinderwand des Zylinders, in der der Kolben im Betriebszustand des Grossdieselmotors läuft, gegenüberstehen.

In der Tat ist der Verschleissschutz dieser Oberflächen des Kolbens, also der Oberfläche des Feuerstegs, der sich in bekannter Weise in einer dem Zylinderdeckel abgewandten Richtung an die Kolbenoberfläche anschliesst und die Kolbenkrone bildet, und / oder der Oberfläche des Kolbens im Bereich der Kolbenringpackung von Grundsatz her kein sehr drängendes Problem, da im normalen Betriebszustand diese Flächen nicht in reibendem Kontakt mit der Zylinderwand des Zylinders stehen sollten und somit im Prinzip auch nicht gegen Reibungsbelastungen geschützt werden müssen.

Allerdings hat sich gezeigt, dass die zuvor erwähnten Umfangsflächen eines Kolbens eines Zweittakt-Grossdieselmotors, die z.B. als Antrieb in grossen Schiffen oder auch stationär als Antrieb für einen landgestützten Generator zur Erzeugung elektrischer Energie verbreitet im Einsatz sind, die Verschmutzung mit Ablagerungen aller Art, insbesondere Ablagerungen, die aus dem Verbrennungsprozess stammen, wie etwa Russ, zunehmend zu Problemen führt.

Die Ursache dafür, dass eine Vermeidung dieser Ablagerungen an den Umfangsflächen des Kolbens zunehmend an Bedeutung gewinnt, liegt nicht zuletzt daran, dass immer höhere Leistungen, bei gleichzeitiger Reduktion von Treib- und Schmierstoffverbrauch verlangt wird und darüber hinaus vor allem auch die Abgasnormen ständig verschärft werden.

Schmutz- Russ- oder andere Ablagerungen, nicht nur an den Umfangsflächen des Kolbens, führen jedoch zu mehr Treibstoff und Schmiermittelverbrauch, natürlich auch zu verschmutzungsbedingten Abnutzungserscheinungen an Kolben, Kolbenringen und Zylinderwänden und zu einer Verschlechterung der Abgaswerte.

Gängige Praxis im Stand der Technik ist es, die Ablagerungen an den Umfangsflächen der Kolben soweit als möglich durch im wesentlichen zwei Massnahmen während des Betriebs des Grossdieselmotors immer wieder abzutragen:

Einerseits ist es bekannt in der Nähe des oberen Totpunkts des Kolbens in der Zylinderwand einen Abstreifring, oft auch als "Scraper-Ring" oder "Antipolishing Ring" bezeichnet, vorzusehen, an dem die Umfangsfläche am Feuerstegs im Bereich der Kolbenkrone schabend vorbei läuft, so dass durch den Abstreifring Ablagerungen, z.B. Russ oder andere Verbrennungsrückstände im Bereich des Feuerstegs mehr oder weniger vollständig abgeschabt werden.

Der Nachteil dieser Methode ist vor allem, dass aus nahe liegenden und bekannten Gründen erstens nur Ablagerungen im Bereich des Feuersteg, also oberhalb der Kolbenringpackung entfernbar sind, zweitens die abgeschabten Teilchen in das Schmieröl bzw. zwischen Kolben und Zylinderwand und / oder zwischen die Laufflächen der Kolbenringe und die Zylinderwand gelangen können, und dort durch ihre aggressiven abrasiven Eigenschaften erhebliche Schäden an den sich gegeneinander in reibendem Kontakt stehenden Teilen verursachen können und natürlich dabei auch das Schmieröl massiv verschmutzen, was letztlich zu einem erhöhten Schmierölverbrauch führt.

Im übrigen garantiert dieses Verfahren auch im Bereich der Kolbenkrone keine optimale Reinigung der Umfangsfläche des Kolbens. Der Kolben selbst läuft nämlich, insbesondere im Bereich des oberen Totpunkts, der ja einen Umkehrpunkt zwischen einer Aufwärts- und einer Abwärtsbewegung bildet, nicht immer exakt zentriert im Zylinder, sondern kann durchaus leicht verkippt oder leicht unzentriert laufen, so dass in solchen Betriebszuständen die Umfangsfläche des Kolbens in Umfangsrichtung nicht immer gleichmässig und vollständig durch den Abstreifring gereinigt wird. Überschreitet eine Verkippung oder ein nicht vollständig zentrierter Lauf des Kolbens im Zylinder einen gewissen Toleranzwert, so kann es dazu kommen, dass die Zylinderwand mit einer Ablagerung auf der Kolbenoberfläche so stark in reibenden Kontakt kommt, dass die Ablagerungen den Ölfilm auf der Zylinderwand abstreifen, was sogar letztlich zu einem Fressen des Kolbens an der Zylinderwand und damit zur Beschädigung des entsprechenden Zylinderliners, im schlimmsten Fall des Grossdieselmotors als Ganzem führt.

Somit ist die Lösung mit Abstreifring an sich, das heisst aus ihrer Funktion heraus schon nicht optimal und mit zahlreichen Problemen behaftet.

Um insbesondere auch Ablagerungen im Bereich der Kolbenringpackung bzw. unterhalb im Bereich des Kolbenhemds, aber natürlich auch im Bereich der Kolbenkrone zu beseitigen, ist es ebenfalls bekannt, das Schmieröl, das im Betriebszustand auf die Zylinderwand aufgebracht wird, mit entsprechenden Stoffen zu versetzen, die in der Lage sind, Ablagerungen am Kolben zu beseitigen. Das können z.B. seifenartige oder andere Zusätze im Schmieröl sein, die die Ablagerungen zumindest teilweise ablösen und / oder binden können.

Der Nachteil dieser Methode, die häufig auch in Verbindung mit einem Abstreifring zum Einsatz kommt, liegt darin, dass die Ablösung hartnäckiger, d.h. sehr harter und / oder sehr stark haftender und / oder sehr schlecht löslicher und / oder durch die Flüssigkeit sehr schlecht aufnehmbarer Ablagerungen nur unzureichend oder gar nicht durch das Schmieröl abgetragen werden können, so dass die oben beschriebenen schädlichen Wirkungen der Ablagerungen nur teilweise, im schlimmsten Fall gar nicht vermeidbar sind.

Im übrigen wird durch die Zumischung der zuvor erwähnten Zusätze zum Schmieröl das ohnehin schon teure Schmieröl zusätzlich verteuert und / oder der Verbrauch des Schmieröls erhöht sich, was zusätzlich zu höheren Kosten im Betriebszustand führt.

Die Aufgabe der Erfindung ist es daher, einen verbesserten Kolben vorzuschlagen, mit dem die zuvor beschriebenen Nachteile des Stands der Technik vermieden werden, so dass insbesondere die Probleme bei der Beseitigung der Ablagerungen am Kolben nicht mehr auftreten, und damit ein wirtschaftlicherer Betrieb eines Zweitakt-Grossdieselmotors, längere Wartungsintervalle und letztlich eine höhere Lebensdauer der betroffenen Komponenten und des Grossdieselmotors gewährleistet ist.

Die diese Aufgaben lösenden Gegenstände der Erfindung sind durch die Merkmale der unabhängigen Ansprüche 1 und 10 gekennzeichnet.

Die abhängigen Ansprüche beziehen sich auf besonders vorteilhafte Ausführungsformen der Erfindung.

Die Erfindung betrifft somit einen Kolben für einen Zweitakt-Grossdieselmotor, wobei der Zweitakt-Grossdieselmotor mindestens einen Zylinder umfasst, in welchem der Kolben zwischen einem oberen Totpunkt und einem unteren Totpunkt hin- und herbewegbar angeordnet ist, wobei im Zylinder durch einen Zylinderdeckel, eine Zylinderwand des Zylinders, und eine Kolbenoberfläche des Kolbens ein Brennraum begrenzt ist. Der Kolben umfasst eine mindestens einen Kolbenring umfassende Kolbenringpackung, die zwischen einer Kolbenkrone mit einem Feuersteg, der sich in einer dem Zylinderdeckel abgewandten Richtung an die Kolbenoberfläche anschliesst, und einem Kolbenhemd, welches einen unteren, vom Zylinderdeckel abgewandten Abschnitt des Kolben bildet, angeordnet ist. Erfindungsgemäss ist in einem vorgebbaren Bereich einer Oberfläche des Kolbens und / oder des Kolbenrings ein Ablagerungen abweisendes Antihaftmittel vorgesehen.

Wesentlich für die Erfindung ist somit, dass eine sinnvolle und effektive Lösung des Problems der Ablagerungen am Kolben nicht dadurch zu erreichen ist, dass neue Einrichtungen bzw. Methoden zum Entfernen der Ablagerungen gefunden werden müssen, sondern dass gewährleistet werden muss, dass entsprechende Ablagerungen gar nicht erst entstehen, so dass diese auch nicht mehr entfernt werden müssen.

Dabei hat sich überraschender weise gezeigt, dass auch unter den chemisch, physikalisch und auch in Bezug auf Druck und Temperatur äusserst aggressiven Bedingungen, wie sie bekanntermassen in einem Zylinder eines Zweitakt-Grossdieselmotors im Betriebszustand herrschen, Ablagerungen abweisende Antihaftmittel erfolgreich an der Oberfläche des Kolbens einsetzbar sind.

Vor allem was verschiedene, an sich bekannte oder auch durch die Erfindung neu vorgeschlagene Beschichtungen bzw. Beschichtungswerkstoffe angeht, musste bisher davon ausgegangen, dass sie in der aggressiven Umgebung im Zylinder eines Zweitakt-Grossdieselmotors, die mit aggressiven Elementen wie Schwefel, das sich vor allem im Treibstoff findet, und chemischen Folgestoffen wie Säuren, Laugen, und andere aggressiven Stoffen nicht standhalten würden, das heisst nach und nach zerstört würden und damit ihre Funktion nicht bzw. nicht mehr erfüllen könnten und somit zur Verwendung im Grossdieselmotor unbrauchbar sind und in jedem Fall als Antihaftmittel erst gar nicht in Erwägung gezogen wurden wären, selbst wenn der Fachmann die prinzipielle Idee einer Antihaftschicht für einen Kolben eines Zweitakt-Grossdieselmotors überlegt hätte.

Das gleiche trifft auf die erfindungsgemässe Lösung der Bereitstellung einer Nano- und / oder Mikrostrukturierten Oberfläche des Kolbens als Antihaftmittel zu. Hier war von vorne herein zu befürchten, dass die feinen Strukturen in der aggressiven Umgebung im Inneren des Zylinders rasch zerschlissen bzw. zerstört würden, und somit der Fachmann auch diese Lösung bisher prinzipiell nicht in Betracht gezogen hat.

Überraschender Weise hat sich aber durch die vorliegende Erfindung gezeigt, dass die oben geschilderten aggressiven Umgebungseinflüsse viel weniger aggressiv an der Umfangsfläche des Kolbens angreifen, als an anderen Komponenten, wie z.B. an den Ventiltellern, den Ventilsitzen, den Einspritzdüsen, der dem Brennraum direkt zugewandten Kolbenoberfläche usw., die alle mehr oder weniger unmittelbar dem Verbrennungsprozess im Brennraum ausgesetzt sind, während die Umfangsflächen des Kolbens, die nur einen schmalen Spalt zu den Zylinderwänden bilden, diesen enormen Belastungen in dieser Form nicht ausgesetzt sind.

Durch diese überraschende Erkenntnis ist es erstmals möglich geworden, Antihaftmittel zur Verhinderung von Ablagerungen am Kolben vorteilhaft vorzuschlagen und so die Entstehung von Ablagerungen von vorneherein zu verhindern.

In einem für die Praxis besonders wichtigen Ausführungsbeispiel ist das die Ablagerungen abweisende Antihaftmittel durch eine Antihaftbeschichtung, insbesondere durch eine galvanische Beschichtung und / oder eine thermische Beschichtung, im speziellen durch eine thermische Spritzschicht gebildet.

Dabei kommt als Material zur Bildung des Antihaftmittels vorteilhaft ein Material, das ein Metall und / oder eine Metalllegierung und / oder eine keramische Komponente und / oder eine Metallkeramik umfasst, insbesondere Chrom und / oder Titan und / oder Aluminium und / oder Calcium und / oder Zirkon und / oder Yttrium und / oder Stickstoff und oder Kohlenstoff, insbesondere eine DLC-Schicht und / oder Si umfasst.

Vorteilhaft kann das Antihaftmittel auch Titanoxid und / oder Aluminiumoxid und / oder ein Kalziumsilikat und / oder ein Zirkonoxid und / oder ein Yttriumoxid und / oder ein Siliziumoxid und / oder eine teilstabilisierte Keramik und / oder eine Superlegierung des Typs MCrAlY umfassen, wobei M für ein Metall, insbesondere, aber nicht nur, für Co, Fe, Ni oder Cr steht. In ganz speziellen Fällen ist es sogar möglich, dass auch ein weniger Temperatur belastbares Material wie Teflon oder ein ähnlicher Kunststoff zur Anwendung kommt, insbesondere an einer der dem Kolben zugewandten Oberfläche eines Kolbenrings.

Dabei kann ein erfindungsgemässes Antihaftmittel z.B. galvanisch aufgebracht sein und / oder in an sich bekannter Weise durch Eindiffusion und / oder Codiffusion von Metallen und / oder anderen Elementen am Kolben vorgesehen werden. Besonders geeignet sind dabei Schichten mit katalytischer Wirkung, d.h. Oberflächenschichten die chemische Elemente enthalten, die katalytisch den Aufbau einer Ablagerung erschweren oder verhindern.

In einem für die Praxis wichtigen Beispiel ist das Antihaftmittel eine durch ein thermisches Spritzverfahren aufgebrachte Antihaftschicht, und ist insbesondere durch ein HVOF Verfahren, ein Plasma Spritzverfahren, ein Lichtbogenspritzverfahren, ein Flammspritzverfahren, ein Flammschockspritzverfahren oder ein anderes thermisches Spritzverfahren, oder in speziellen Fällen auch durch ein PVD oder ein CVD Verfahren, insbesondere durch ein Plasma CVD Verfahren, aufgebracht.

Wie bereits erwähnt, kann ein Antihaftmittel gemäss der vorliegenden Erfindung auch durch eine Strukturierung der Oberfläche des Kolbens, insbesondere durch eine Nanostrukturierung und / oder eine Mikrostrukturierung, bevorzugt durch Laserbearbeitung, im speziellen Lasertopographie bereitgestellt sein. Die Grösse der Strukturen kann dabei von einigen Nanometern, über einige Mikrometern, bis in den Millimeterbereich liegen, wobei auch spezielle Formen, wie z.B. Bienenwabenstrukturen, Strukturen mit runden oder eckigen Begrenzungen oder anders geeignet geformte Strukturen in die Kolbenoberfläche eingebracht werden können.

Bevorzugt ist dabei das Antihaftmittel am Feuersteg der Kolbenkrone und /oder im Bereich der Kolbenringpackung, insbesondere an und / oder zwischen den Kolberingnuten und / oder an einem Kolbenring, insbesondere an einer der dem Kolben zugewandten Oberfläche des Kolbenrings und / oder im Bereich des Kolbenhemds vorgesehen.

In Fällen, in denen besonders hartnäckige Ablagerungen verhindert werden müssen, kann in der Nähe des oberen Totpunkts des Kolbens in der Zylinderwand zusätzlich ein aus dem Stand der Technik an sich bekannter Abstreifring vorgesehen sein, der in bestimmten Fällen vorteilhaft die Verhinderung der Entstehung von Ablagerungen mit unterstützen kann. In Zusammenwirken mit dem Abstreifring (Antipolishing Ring) ergibt sich mit den in der Erfindung genannten Schichten ein erleichterter oder beschleunigter Selbstreinigungsprozess.

Darüber hinaus betrifft die Erfindung einen Zweitakt-Grossdieselmotor mit einem erfindungsgemässen Kolben wie vorgehend detailliert beschrieben.

Es versteht sich von selbst, dass die in dieser Anmeldung beschriebenen Beispiele von Ausführungsformen erfindungsgemässer Kolben exemplarisch zu verstehen sind, und insbesondere auch alle geeigneten Kombinationen der dargestellten Ausführungsbeispiele von der Erfindung umfasst sind.

Im folgenden wird die Erfindung an Hand der Zeichnung näher erläutert. Es zeigen in schematischer Darstellung:
- Fig. 1: einen Zylinder mit Abstreifring mit einem aus dem Stand der Technik bekannten Kolben;
- Fig. 2: einen Zylinder eines Zweitakt-Grossdieselmotors mit einem erfindungsgemässen Kolben.

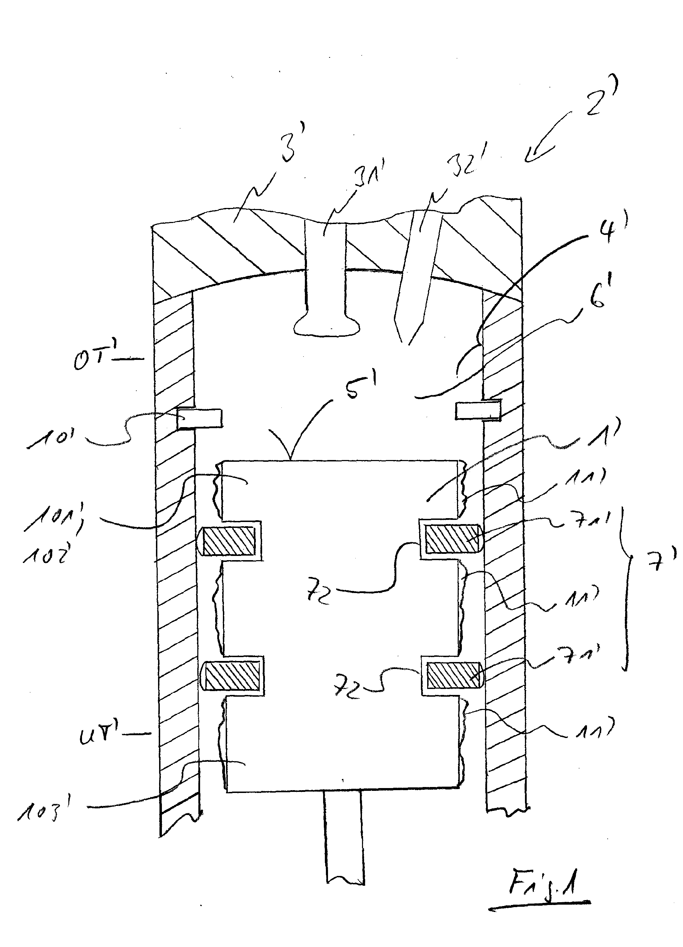

Zum besseren Verständnis der Erfindung, wird mit Fig. 1, die in einer schematischen Darstellung im Schnitt einen Zylinder mit Abstreifring eines Zweitakt-Grossdieselmotors mit einem bekannten Kolben zeigt, zunächst der bekannte Stand der Technik nochmals kurz erläutert.

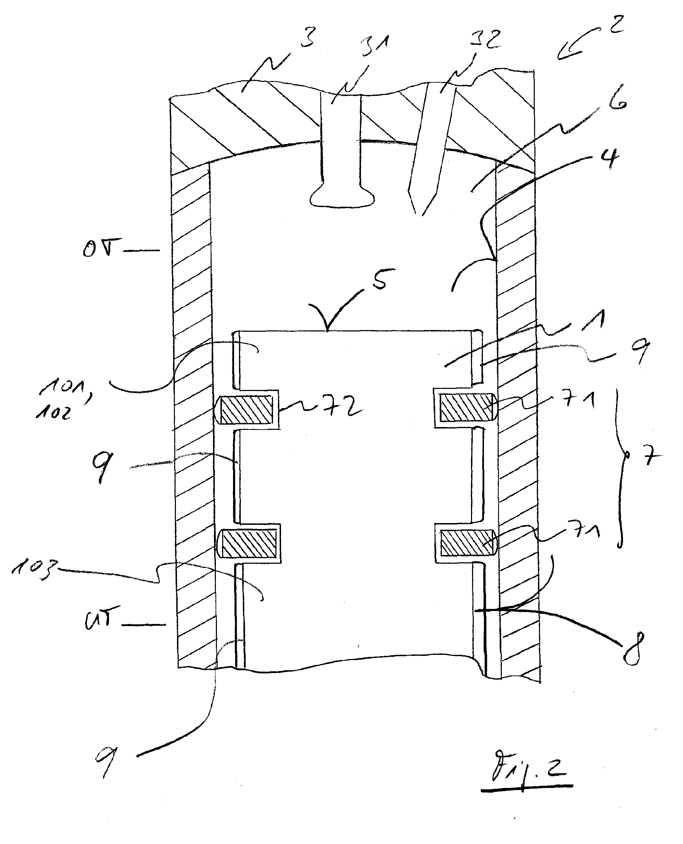

Zur besseren Unterscheidung des Stands der Technik von der vorliegenden Erfindung, sind diejenigen Bezugszeichen, die sich auf Merkmale von aus dem Stand der Technik bekannten Ausführungsformen beziehen, mit einem Hochkomma versehen, während Bezugszeichen zu Merkmalen von Ausführungsbeispielen gemäss der vorliegenden Erfindung, wie in Fig. 2 dargestellt, ohne Hochkomma angegeben sind.

In Fig. 1 ist ein Zylinder 2' dargestellt, in dem ein Kolben 1' vorgesehen ist, der entlang einer Zylinderwand 4' zwischen einem oberen Totpunkt OT' und einem unteren Totpunkt UT' hin- und herbewegbar angeordnet ist. Der Kolben 1', die Zylinderwand 4' und ein Zylinderdeckel 3' begrenzen einen Brennraum 6' des Zylinders 2'. Im Zylinderdeckel 3' ist ein Auslassventil 31' zum Auslassen von Verbrennungsgasen und ein Einspritzventil 32' zum Einspritzen von Treibstoff vorgesehen. Am Kolben 1' ist eine Kolbenringpackung 7' aus mehreren Kolbenringen 71' vorgesehen, wobei aus Gründen Übersichtlichkeit in Fig.1 nur zwei Kolbenringe 71' dargestellt sind. Die Kolbenringe 71' sind in bekannter Weise in Kolbenringnuten 72' vorgesehen, wobei die Laufflächen der Kolbenringe 71' zum Beispiel eine bekannte Verschleisschutzbeschichtung aufweisen können.

In der Zylinderwand 4' ist ein Abstreifring 10' vorgesehen, der zum Abschaben der Ablagerungen 11' dient, allerdings nur im darstellungsgemäss oberen Bereich des Kolbens 1', also nur im Bereich der Kolbenkrone 101', d.h. nur im Bereich des Feuerstegs 102'. Die Ablagerungen 11' im Bereich der Kolbenringpackung 7' und an der Umfangsfläche im Bereich des Kolbenhemds 103' können vom Abstreifring aus den dem Fachmann wohl bekannten Gründen nicht erreicht werden und müssen z.B. durch die oben erwähnten speziellen Zusätze im Schmieröl entfernt werden.

In Fig. 2 ist dagegen im Schnitt ein Zylinder eines Zweitakt-Grossdieselmotors mit einem erfindungsgemässen Kolben 1 dargestellt.

Der erfindungsgemässe Kolben 1 ist dabei in an sich bekannter Weise zwischen einem oberen Totpunkt OT und einem unteren Totpunkt UT hin- und herbewegbar angeordnet. Im Zylinder 2 ist durch einen Zylinderdeckel 3, eine Zylinderwand 4 des Zylinders 2, und eine Kolbenoberfläche 5 des Kolbens 1 ein Brennraum 6 begrenzt, wobei der Kolben 1 eine mindestens einen Kolbenring 71 umfassende Kolbenringpackung 7 umfasst, die zwischen einer Kolbenkrone 101 mit einem Feuersteg 102, der sich in einer dem Zylinderdeckel 3 abgewandten Richtung an die Kolbenoberfläche 5 anschliesst und einem Kolbenhemd 103, welches einen unteren, vom Zylinderdeckel 3 abgewandten Abschnitt des Kolben 1 bildet, angeordnet. Gemäss der vorliegenden Erfindung ist in einem vorgebbaren Bereich einer Oberfläche 8 des Kolbens, im vorliegenden Beispiel der Fig. 2 an der gesamten äusseren Umfangsfläche des Kolbens 1, d.h. im Bereich der Kolbenkrone 101, im Bereich der Kolbenringpackung 7 und im Bereich des Kolbenhemds 103 ein Ablagerungen abweisendes Antihaftmittel 9 vorgesehen. Im Beispiel der Fig. 2 ist das Antihaftmittel in Form einer thermischen Spritzschicht aufgebracht, die im wesentlichen eine metallische Komponente umfasst, so dass eine gute Haftung der Antihaftschicht 9 auf der metallischen Oberfläche des Kolbens 1 erreichbar ist, sowie eine keramische Komponente, die insbesondere eine ausreichende Härte und Resistenz, z.B. gegen chemische, physikalische und Temperatur bedingte Angriffe garantiert.

Es versteht sich, dass in einem anderen Ausführungsbeispiel auch die Kolberingnute 72, in denen die Kolberinge 71 angeordnet sind, oder nur bestimmte Bereiche der Kolbenringnute 72, oder auch der Kolbering 71 ein Antihaftmittel 9 aufweisen können. Weiter ist klar, dass je nach Anforderungen nicht alle zuvor beschriebenen Oberflächen mit einem Antihaftmittel 9 versehen sein müssen und / oder in ganz speziellen Fällen verschiedene Oberflächenbereich auch mit unterschiedlichen Antihaftmitteln 9 ausgestattet sein können.

## Patentansprüche

1. Kolben für einen Zweitakt-Grossdieselmotor, wobei der Zweitakt-Grossdieselmotor mindestens einen Zylinder (2) umfasst, in welchem der Kolben zwischen einem oberen Totpunkt (OT) und einem unteren Totpunkt (UT) hin- und herbewegbar angeordnet ist, und im Zylinder (2) durch einen Zylinderdeckel (3), eine Zylinderwand (4) des Zylinders (2), und eine Kolbenoberfläche (5) des Kolbens ein Brennraum (6) begrenzt ist, wobei der Kolben eine mindestens einen Kolbenring (71) umfassende Kolbenringpackung (7) umfasst, die zwischen einer Kolbenkrone (101) mit einem Feuersteg (102), der sich in einer dem Zylinderdeckel (3) abgewandten Richtung an die Kolbenoberfläche (5) anschliesst und einem Kolbenhemd (103), welches einen unteren, vom Zylinderdeckel (3) abgewandten Abschnitt des Kolben bildet, angeordnet ist, **dadurch gekennzeichnet, dass** in einem vorgebbaren Bereich einer Oberfläche (8) des Kolbens und / oder des Kolbenrings ein Ablagerungen abweisendes Antihaftmittel (9) vorgesehen ist.

2. Kolben nach Anspruch 1, wobei das die Ablagerungen abweisende Antihaftmittel (9) durch eine Antihaftbeschichtung (9), insbesondere durch eine galvanische Beschichtung (9) und / oder eine thermische Beschichtung (9), im speziellen durch eine thermische Spritzschicht (9), und / oder ein PVD-Verfahren, und / oder ein CVD-Verfahren, insbesondere durch ein Plasma CVD-Verfahren gebildet ist.

3. Kolben nach einem der Ansprüche 1 oder 2, wobei das Antihaftmittel (9) ein Metall und / oder eine Metalllegierung und / oder eine keramische und / oder eine Metallkeramik umfasst, insbesondere Chrom und / oder Titan und / oder Aluminium und / oder Calcium und / oder Zirkon und / oder Yttrium und / oder Stickstoff und oder Kohlenstoff, insbesondere eine DLC-Schicht und / oder Si umfasst.

4. Kolben nach einem der vorangehenden Ansprüche, wobei das Antihaftmittel (9) Titanoxid und / oder Aluminiumoxid und / oder ein Kalziumsilikat und / oder ein Zirkonoxid und / oder ein Yttriumoxid und /oder ein Siliziumoxid und / oder eine teilstabilisierte Keramik und / oder eine Superlegierung des Typs MCrAIY umfasst.

5. Kolben nach einem der vorangehenden Ansprüche, wobei das Antihaftmittel (9) galvanisch aufgebracht ist und / oder durch Eindiffusion und / oder Codiffusion von Metallen und / oder anderen Elementen am Kolben vorgesehen ist.

6. Kolben nach einem der vorangehenden Ansprüche wobei das Antihaftmittel (9) eine durch ein thermisches Spritzverfahren aufgebrachte Antihaftschicht (9) ist, insbesondere durch ein HVOF Verfahren, ein Plasma Spritzverfahren, ein Lichtbogenspritzverfahren, ein Flammspritzverfahren, ein Flammschockspritzverfahren oder ein anderes thermisches Spritzverfahren aufgebracht ist.

7. Kolben nach einem der vorangehenden Ansprüche, wobei das Antihaftmittel (9) durch eine Strukturierung der Oberfläche (8) des Kolbens, insbesondere durch Nanostrukturierung und / oder Mikrostrukturierung, bevorzugt durch Laserbearbeitung, im speziellen Lasertopographie bereitgestellt ist.

8. Kolben nach einem der vorangehenden Ansprüche, wobei das Antihaftmittel (9) am Feuersteg (102) der Kolbenkrone (101) und / oder im Bereich der Kolbenringpackung (7), insbesondere an und / oder zwischen Kolberingnuten (72) und / oder an einem Kolbenring (71) und / oder im Bereich des Kolbenhemds (103) vorgesehen ist.

9. Kolben nach einem der vorangehenden Ansprüche, wobei in der Nähe des oberen Totpunkt (OT) in der Zylinderwand (4) ein Abstreifring vorgesehen ist.

10. Zweitakt-Grossdieselmotor mit einem Kolben (1) nach einem der vorangehenden Ansprüche.
